# EUROPÄISCHE PATENTSCHRIFT

(11) **EP 0 774 486 B1**
(45) Veröffentlichungstag und Bekanntmachung des Hinweises auf die Patenterteilung: **18.02.2004**
(21) Anmeldenummer: 96117739.1
(22) Anmeldetag: 06.11.1996
(51) Int. Cl.: C08K 3/04, C08L 81/02, C08J 3/12

(54) **Verfahren zur Herstellung von Granulaten bestehend aus Polyarylensulfid, Russ und Graphit**
Process for the manufacture of granulates containing polyarylene sulfide, carbonblack and graphite
Procédé pour la préparation de granulates comprenant polyarylene sulfide, noir de carbone et grafite

(30) Priorität: 20.11.1995 DE 19543209
(43) Veröffentlichungstag der Anmeldung: 21.05.1997
(73) Patentinhaber: Ticona GmbH, 65451 Kelsterbach (DE)
(72) Erfinder: Radden, Peter, 65795 Hattersheim (DE); Kohlhepp, Klaus, 65817 Eppstein (DE)

(56) Entgegenhaltungen:
- EP-A- 0 376 336
- EP-A- 0 557 088
- EP-A- 0 581 541
- DE-A- 3 935 140
- POLYM.-PLAST.TECHNOL.ENG., Bd. 32, Nr. 6, 1993, Seiten 647-657, XP000651590 S.Y.MOKASHI AND J.P.JOG: "Solid-state compaction of polyphenylene sulfide"

## Beschreibung

Die Erfindung betrifft ein Verfahren zur Herstellung von kompakten Formlingen aus Ruß und Graphit enthaltenden Polyarylensulfiden. Diese lassen sich anschließend leichter im Extrusions- oder Spritzgußverfahren verarbeiten.

Polyarylensulfide und ihre Herstellung sind bekannt. Sie können thermoplastisch extrudiert und zu Spritzgußteilen, Folien und Fasern verarbeitet werden.

Polyarylensulfide mit leitfähigem Ruß und Graphit abzumischen ist ebenfalls bekannt (DE-A 39 35 140).

Die Kompaktierung von Polyphenylensulfid-Pulver (PPS) ist untersucht und beschrieben von S.Y. Mokashi und J.P. Jog in Polym.-Plast. Technol. Eng., 32 (6), 647-656 (1993). Es wird aber nur die generelle Untersuchung der Parameter bei der Feststoffkompaktierung von PPS ohne weitere Zusätze aufgezeigt.

Pulverförmiges Polyphenylensulfid sowie Ruß sind sehr voluminös, d.h. sie haben ein niedriges Schüttgewicht. Bei einer Verarbeitung von Mischungen dieser Pulver auf Extrudern gibt es im allgemeinen Einzugsprobleme und eine dementsprechend geringe Durchsatzleistung, da der im Pulvergemisch vorhandene große Volumenanteil an Luft über den Dosierungseingang entgast.

Aufgabe der Erfindung war es, diese Nachteile zu vermeiden, das heißt die Leistungsaufnahme der Extrusionsanlage bei der Extrusion von Polyphenylensulfid/Ruß/Graphit Gemischen zu erhöhen und den Materialdurchsatz pro Zeiteinheit zu steigern.

Die Erfindung betrifft ein Verfahren zur Herstellung eines verdichteten Materials auf Basis eines kohlenstoffhaltigen Polyarylensulfids, bei dem eine pulverförmige Mischung aus 20 bis 80, vorzugsweise 30 bis 70 Gew.-%, eines Polyarylensulfids (a), 1 bis 70 Gew.-%, vorzugsweise 5 bis 70 Gew.-%, insbesondere 20 bis 70 Gew.-%, eines Rußes (b) und 1 bis 70 Gew.-%, vorzugsweise 5 bis 70 Gew.-%, insbesondere 20 bis 70 Gew.-%, Graphit (c), wobei das Gewichtsverhältnis von Ruß zu Graphit 5:1 bis 1:10 beträgt und die Summe der Gewichtsprozente (a) bis (c) jeweils 100 Gewichtsprozent ist, in einem Kompaktor verdichtet wird. Das verdichtete Material liegt im allgemeinen in Form von Kompaktlingen oder Granulat vor.

Durch die vorliegende Erfindung ist es gelungen, Mischungen aus Polyarylensulfid, Ruß und Graphit problemlos kontinuierlich zu verarbeiten und hohe Durchsätze auf den Maschinen zu erzielen. Das erhaltene verdichtete Material kann einfach und schnell zur Herstellung von Formkörpern aus Kohlenstoff enthaltenden Polyarylensulfiden eingesetzt werden. Während die Kompaktierung nach Mokashi (loc. cit.) stationär durchgeführt wird, verläuft sie beim Verfahren gemäß der Erfindung kontinuierlich. Beide Verfahren sind nicht vergleichbar.

Als Polyarylensulfide gemäß der Erfindung kommen z.B. die durch Umsetzung von Dihalogenaromaten, wie p-Dichlorbenzol, mit Schwefelspendern erhältlichen linearen und verzweigten Polykondensate in Betracht (EP-A 0 171 021). Polyphenylensulfid (siehe Ullmann's Encyclopedia of Industrial Chemistry, Vol. A21, Weinheim-New York 1992, S. 463) wird bevorzugt verwendet.

Verwendbare Rußsorten sind beispielsweise handelsübliche Leitruße, hergestellt nach verschiedenen Verfahren und feingemahlener Koks.

Als Graphit sind Graphitpulver oder Graphitstäube einsetzbar, die beispielsweise als Elektrodengraphit in einem breiten Kornspektrum mit Partikeldurchmessern bis zu 5 mm handelsüblich sind. Bevorzugt werden Graphitpulver mit mittlerer Teilchengröße bis zu 1 mm, insbesondere bis 0,5 mm, verwendet.

Als Kompaktoren können die handelsüblichen Maschinen verwendet werden, mit denen formbeständige, definierte Kompaktlinge oder definierte Granulate erzeugt werden können. Der anfallende Feinanteil kann nach dem Abtrennen (Absieben) wieder in den Verdichtungsprozess zurückgeführt werden, ohne daß eine Schädigung des Materials eintritt.

Die weitere Verarbeitung des kompaktierten Materials kann nach den bekannten Compoundier- und/oder Spritzgußverfahren erfolgen.

Das nach dem Verfahren gemäß der Erfindung hergestellte kompaktierte Material kann durch eine anschließende Compoundierung mit weiteren Zusatzstoffen, wie pulver- und/oder faserförmigen Füll- bzw. Verstärkungsmitteln, Verarbeitungshilfsmitteln und Stabilisatoren, versehen werden. Pulverförmige Zusatzstoffe sind z.B. Kreide, Talk, Ton, Glimmer und faserförmige Verstärkungsmittel können Glas-, Kohlenstoff- oder organische Fasermaterialien sein.

Es ist auch mitunter möglich, die Zusatzstoffe vor dem Kompaktieren dem Gemisch aus a) bis c) zuzusetzen. Allerdings sind dabei Vorversuche über die zuzusetzende Menge durchzuführen, um eine einwandfreie Kompaktierung zu gewährleisten.

Der Anteil der Füllstoffe beträgt im allgemeinen 5 bis 80 Gew.-%, vorzugsweise 15 bis 70 Gew.-% und insbesondere 20 bis 65 Gew.-%, bezogen auf die Summe der Komponenten a) bis c).

Das verdichtete Material gemäß der Erfindung dient zur Herstellung mechanisch und thermisch hoch belastbarer Formteile nach dem Extrusions- oder Spritzgußverfahren.

Wichtigste Einsatzgebiete sind Elektrotechnik und Elektronik (z.B. Stecker und Steckerleisten, Spulenkörper, Relaisteile, Schalter, Einkapselung elektronischer Bauteile). In der Automobilindustrie finden diese Formteile ebenfalls Verwendung (Luftansaugsysteme, Pumpen, Ventile, Dichtungen, Komponenten für Abgas-Rückführungssysteme). Auch im Maschinenbau und in der Feinwerktechnik werden diese Formteile für Funktionsteile verwendet.

### Beispiele:

Zum Kompaktieren wurde ein Kompaktor der Firma Bepex-Hutt (Leingarten, Bundesrepublik Deutschland), Typ L 200/50, mit profilierten Walzen benutzt: Walzendurchmesser: 200 mm, Walzenbreite: 50 mm, variable Walzendrehzahl (3-15 U/min), variable Schneckendrehzahl (18-90 U/min), Antriebsleistung Walzen: 3,5 kW, Antriebsleistung Schnecke: 0,75 kW.
1) Eine pulverförmige Mischung aus 50 Gew.-% Polyphenylensulfid, Dichte 1,35 g/cm³, Wasseraufnahme 0,01 %, Wärmeformbeständigkeitstemperatur 110°C (®Fortron 0203 B6 der Fa. Hoechst AG, Frankfurt a. M., Bundesrepublik Deutschland), 5 Gew.-% Ruß (®Vulkan P, Fa. Cabot GmbH, Hanau, Bundesrepublik Deutschland), 45 Gew.-% Graphit (V 1632, Fa. Ringsdorff GmbH, Bonn, Bundesrepublik Deutschland) wurde im oben beschriebenen Kompaktor unter folgenden Bedingungen zu kissenförmigen Granulaten kompaktiert:

| | | |
|---|---|---|
| Walzenprofil | - | Kissen (5 x 5 x 3 cm) |
| Stopfschneckenprofil | - | 5 Gänge |
| Walzendrehzahl | min ⁻¹ | 13 |
| Getriebestellung Walzen | - | 9 |
| Schneckendrehzahl | min ⁻¹ | 90 |
| Getriebestellung Schnecke | - | 8 |
| Preßdruck Walzen | kN | 70-150 |
| Durchsatz (Versuchsmischung) | kg/h | 30 |
| Feinanteil < 2 mm | Gew.-% | 50 |
| Produkttemperatur Eintritt | °C | 25 |
| Produkttemperatur Austritt | °C | 48-50 |
| Schüttgewicht vorher | g/l | 420 |
| Schüttgewicht nachher | g/l | 780 |
| Verdichtungsverhältnis¹⁾ | - | 1,86 |

| | | |
|---|---|---|
| ¹⁾ P nachher / P vorher | | |

2) Verarbeitung des kompaktierten Materials:
Das kompaktierte Material wurde neben einer üblichen Pulvermischung auf einen Zweischneckenextruder (Typ ZSK 25, Fa. Werner und Pfleiderer, Stuttgart, Bundesrepublik Deutschland) bei Temperaturen von 180 bis 320°C, Schneckendrehzahl: 100 U/min, Entgasung 0,5 bar plastifiziert. Das Material gemäß der Erfindung zeigte eine deutliche Überlegenheit. Die Leistungsaufnahme und der Durchsatz im Extruder betrug nach der Kompaktierung 80 % bzw. 18 kg/h gegenüber 20 % bzw. < 3 kg/h bei der nicht verdichteten Pulvermischung.

## Patentansprüche

1. Kontinuierliches Verfahren zur Herstellung eines verdichteten Materials auf Basis eines kohlenstoffhaltigen Polyarylensulfids, **dadurch gekennzeichnet, daß** eine pulverförmige Mischung aus
(a) 20 bis 80 Gew.-% eines Polyarylensulfids,
(b) 1 bis 70 Gew. -% eines Rußes und
(c) 1 bis 70 Gew. -% Graphit,
wobei das Gewichtsverhältnis von Ruß zu Graphit 5:1 bis 1:10 beträgt und die Summe der Gewichtsprozente (a), (b) und (c) jeweils 100 Gewichtsprozent ist, in einem Kompaktor derart verdichtet wird, dass die Eintrittstemperatur des Materials in den Kompakter 25 °C und die Austrittstemperatur aus dem Kompakter zwischen 48 - 50 °C beträgt.

2. Verfahren nach Anspruch 1, **dadurch gekennzeichnet, daß** als Polyarylensulfid Polyphenylensulfid eingesetzt wird.

3. Verfahren nach Anspruch 1 oder 2, **dadurch gekennzeichnet, daß** das verdichtete Material in Form von Kompaktlingen oder Granulat hergestellt wird.

4. Verwendung des verdichteten Materials, hergestellt nach einem oder mehreren der Ansprüche 1 bis 3, zur Herstellung mechanisch und thermisch hoch belastb arer Formteile.

## Claims

1. Continuous process for producing a densified material based on a carbonaceous polyarylene sulphide, **characterized in that** a pulverulent mixture of
(a) 20 to 80% by weight of a polyarylene sulphide,
(b) 1 to 70% by weight of a carbon black and
(c) 1 to 70% by weight of graphite,
the weight ratio of carbon black to graphite being in the range from 5:1 to 1:10 and the sum total of the weight percentages (a), (b) and (c) being 100 per cent by weight in each case, is densified in a compactor in such a way that the entry temperature of the material into the compactor is 25°C and the exit temperature from the compactor is between 48-50°C.

2. Process according to Claim 1, **characterized in that** the polyarylene sulphide used is polyphenylene sulphide.

3. Process according to Claim 1 or 2, **characterized in that** the densified material is produced in the form of compacts or pellet.

4. Use of the densified material produced according to one or more of Claims 1 to 3 for producing shaped articles capable of withstanding high mechanical and thermal loads.

## Revendications

1. Procédé continu de préparation d'une matière comprimée à base d'un polysulfure d'arylène renfermant du carbone, **caractérisé en ce qu'**un mélange pulvérulent de
(a) de 20 à 80 % en poids d'un polysulfure d'arylène,
(b) de 1 à 70 % en poids d'un noir de carbone et
(c) de 1 à 70 % en poids de graphite,
où le rapport pondéral entre le noir de carbone et le graphite est de 5:1 à 1:10 et la somme des pourcentages pondéraux de (a), (b) et (c) est dans chaque cas de 100 pour cent en poids, est comprimé dans un compacteur de telle sorte que la température d'entrée de la matière dans le compacteur soit de 25°C et que la température de sortie hors du compacteur soit comprise entre 48 et 50°C.

2. Procédé selon la revendication 1, **caractérisé en ce que** le polysulfure de phénylène est utilisé en tant que polysulfure d'arylène.

3. Procédé selon la revendication 1 ou 2, **caractérisé en ce que** la matière comprimée est préparée sous forme de corps compacts ou de granulé.

4. Utilisation de la matière comprimée, préparée selon l'une ou plusieurs des revendications 1 à 3, pour la production de pièces moulées à haute résistance mécanique et thermique.
